# EUROPEAN PATENT APPLICATION

(11) **EP 3 842 272 A1**
(43) Date of publication of application: **30.06.2021**
(21) Application number: 19853023.0
(22) Date of filing: 24.07.2019
(51) Int. Cl.: B60K 17/28, B60L 50/10

(54) **POWER GENERATION SYSTEM AND MOBILE CHARGING VEHICLE EQUIPPED WITH SAME**

(30) Priority: 23.08.2018 CN 201810968476
(71) Applicant: NIO (ANHUI) HOLDING CO., LTD, Economic and Technological Development Zone Hefei Anhui 230601 (CN)
(72) Inventor: YANG, Changcheng, Shanghai 201804 (CN); TAN, Zhuohui, Shanghai 201804 (CN); HE, Xu, Shanghai 201804 (CN)
(74) Representative: Patentwerk B.V.
(86) International application number: PCT/CN2019/097498
(87) International publication number: WO 2020/038176

(57) **Abstract**

Provided are a power generation system and a mobile charging vehicle having same. The power generation system mainly comprises an engine (1), a gearbox (2) in driving connection with the engine (1), a transfer case (3) in driving connection with the gearbox (2), a power generator (4) in driving connection with a first output shaft (34) of the transfer case (3), and a drive axle (5) in driving connection with a second output shaft (36) of the transfer case (3).

## Description

### Technical Field

The invention relates to the technical field of power distribution, and particularly provides a power generation system and a mobile charging vehicle having same.

### Background Art

Along with the increasing number of electric vehicles on the market, existing charging stations, battery swap stations, and battery charging and swapping stations cannot meet daily requirements of the electric vehicles. Especially, when the electric energy of the electric vehicle runs out on the way, the electric vehicle needs to be transported to a charging station or a battery swap station by means of other vehicles for battery charging or swapping.

In view of the problem, mobile charging vehicles have been launched on the market for acting as temporary charging stations. Currently, a mobile charging vehicle equipped with a power generation system usually generates power by means of a whole diesel generator set (diesel engine plus power generator) installed in a compartment. Limited by a small compartment space and a small vehicle load, the mobile charging vehicle cannot be provided with a power generator set with a large size and a large weight. In other words, the mobile charging vehicle cannot be provided with a power generator set with high generated power. Therefore, the generated power of the mobile charging vehicle in the current market is relatively low.

Along with the development of electric vehicle quick charging technology, the existing mobile charging vehicle cannot meet the charging requirement of the electric vehicle.

Accordingly, this field needs a new power generation system and a mobile charging vehicle with the power generation system to solve the above problems.

### Summary of the Invention

For solving the above problems in the prior art, that is, the problem that a vehicle-mounted power generation system of an existing mobile charging vehicle is low in generated power and cannot meet the charging requirement of an electric vehicle, the invention provides a power generation system, the power generation system being applied to a vehicle; the vehicle comprises an engine and a drive axle; and the power generation system comprises a power generator and a connection device for connecting the engine and the power generator in a driving manner, and the connection device enables the engine to be selectively connected to the power generator and/or the drive axle in a driving manner.

In a preferred technical solution of the power generation system described above, the connection device comprises a transfer case, the transfer case comprising:
a case body;
an input shaft pivotally arranged on the case body and in driving connection with an output shaft of the engine;
a first output shaft pivotally arranged on the case body and in driving connection with a spindle of the power generator; and
a second output shaft pivotally arranged on the case body and in driving connection with the drive axle,
wherein the input shaft is capable of being selectively connected to the first output shaft or the second output shaft in a driving manner.

In a preferred technical solution of the power generation system described above, the transfer case further comprises an input gear coaxially fixed to the input shaft, a first output gear coaxially fixed to the first output shaft, and a second output gear coaxially fixed to the second output shaft; the first output gear and the second output gear are arranged in a staggered manner in an axial direction; and the input gear is axially slidable and thus capable of selectively meshing with the first output gear or the second output gear.

In a preferred technical solution of the power generation system described above, the transfer case further comprises a driving mechanism slidably arranged on the case body, the driving mechanism being capable of shifting the input gear and thereby making the input gear selectively mesh with the first output gear or the second output gear.

In a preferred technical solution of the power generation system described above, a first stop block and a second stop block which are adjacent to each other are arranged on the input shaft in the axial direction, and the driving mechanism comprises a shifting fork located between the first stop block and the second stop block and a handle fixedly connected to or manufactured integrally with the shifting fork, the shifting fork being capable of selectively pushing the first stop block or the second stop block by operating the handle, thereby making the input gear move in the axial direction.

In a preferred technical solution of the power generation system described above, the engine is provided with a first output shaft and a second output shaft in a matching manner, and the connection device comprises a first clutch in driving connection with the first output shaft and a second clutch in driving connection with the second output shaft, one end, away from the engine, of the first clutch being in driving connection with the power generator, and one end, away from the engine, of the second clutch being in driving connection with the drive axle of the vehicle.

In a preferred technical solution of the power generation system described above, the first output shaft and the second output shaft are both arranged on the engine, or the first output shaft and the second output shaft are both arranged on a power takeoff which is in driving connection with the engine; and/or, the first clutch and/or the second clutch is an electromagnetic clutch or a pneumatic clutch.

In a preferred technical solution of the power generation system described above, the drive axle comprises a front axle and/or a rear axle of the vehicle.

In a preferred technical solution of the power generation system described above, the power generation system further comprises a gearbox, an input shaft of the gearbox being in driving connection with the engine, and an output shaft of the gearbox being in driving connection with the connection device.

In addition, the invention further provides a mobile charging vehicle, and the mobile charging vehicle comprises the power generation system in any one of the preferred technical solutions of the power generation system described above.

Those skilled in the art can understand that in the preferred technical solution of the invention, the engine is selectively in driving connection with the power generator or the drive axle of the vehicle, such that the engine may drive the vehicle to travel and drive the power generator to rotate when the vehicle is stopped, and the power generator provides charging service for the electric vehicle to be charged. Due to the fact that the output power of the engine driving the vehicle to travel is larger than the output power of an vehicle-mounted engine which is independently configured for the power generator in the prior art, the engine of the invention may drive the power generator with larger generated power, and the current and voltage output by the power generator can meet normal requirements of the electric vehicle to be charged.

It should be noted that in a preferred embodiment of the invention, the vehicle described above refers to the mobile charging vehicle.

Further, a transfer case is connected to an output end of the gearbox, a first output shaft of the transfer case is connected to the power generator, and a second output shaft of the transfer case is connected to the drive axle of the mobile charging vehicle, such that torque output by the engine may be selectively transmitted to the power generator or the drive axle by means of the transfer case. Therefore, compared with a mobile charging vehicle in the prior art, the mobile charging vehicle of the invention does not need to be configured with an independent engine for the power generator any more, thereby reducing the overall weight of the mobile charging vehicle. Moreover, the mobile charging vehicle of the invention may adjust a rotating speed output by the first output shaft of the transfer case by means of the gearbox, thereby adjusting the output power of the power generator. Further, the transfer case of the invention may be arranged in a front cabin of the mobile charging vehicle and may also be arranged on a lower side of a chassis of the mobile charging vehicle, thereby also saving on the internal space of the mobile charging vehicle of the invention.

In another feasible embodiment of the invention, the engine may also drive the power generator to rotate while driving the mobile charging vehicle to travel, such that the mobile charging vehicle can also charge the electric vehicle to be charged or other objects to be charged during travelling, thereby meeting special requirements of users.

### Brief Description of the Drawings

Preferred embodiments of the invention will be described below with reference to the accompanying drawings and in combination with a mobile charging vehicle, in which:
Fig. 1 is a schematic diagram of a power generation system, in a first working condition, of the invention;
Fig. 2 is a schematic diagram of the power generation system, in a second working condition, of the invention;
Fig. 3 is a structural schematic diagram of a transfer case of the invention;
Fig. 4 is an enlarged view of a portion A in Fig. 3; and
Fig. 5 is a cutaway diagram of Fig. 4 in a B-B direction.

### List of reference numerals:

1. Engine; 2. Gearbox; 3. Transfer case; 4. Power generator; 5. Drive axle;
31. Case body; 32. Input shaft; 33. Input gear; 34. First output shaft; 35. First output gear; 36. Second output shaft; 37. Second output gear; 38. Driving mechanism;
321. First stop block; 322. Second stop block;
381. Handle; and 382. Shifting fork.

### Detailed Description of Embodiments

It should be understood by those skilled in the art that embodiments in this section are merely used to explain the technical principle of the invention and are not intended to limit the scope of protection of the invention. For example, although various components in the drawings are drawn in a certain proportional relationship, such a proportional relationship is not fixed, those skilled in the art can make amendments according to requirements so as to adapt to specific application scenarios, and the amended technical solutions will still fall within the scope of protection of the invention.

It should be noted that, in the description of the invention, the terms that indicate the direction or positional relationship, such as "center", "upper", "lower", "left", "right", "vertical", "horizontal", "inner" and "outer", are based on the direction or positional relationship shown in the figures, which is merely for ease of description instead of indicating or implying that the device or element must have a particular orientation and be constructed and operated in a particular orientation, and therefore, should not be construed as limiting the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For those skilled in the art, the specific meaning of the above terms in the invention can be interpreted according to the specific situation.

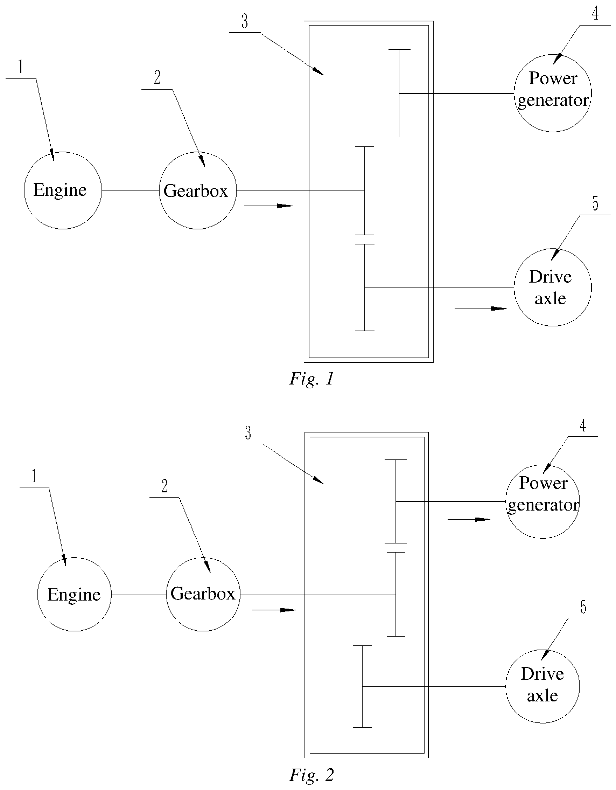

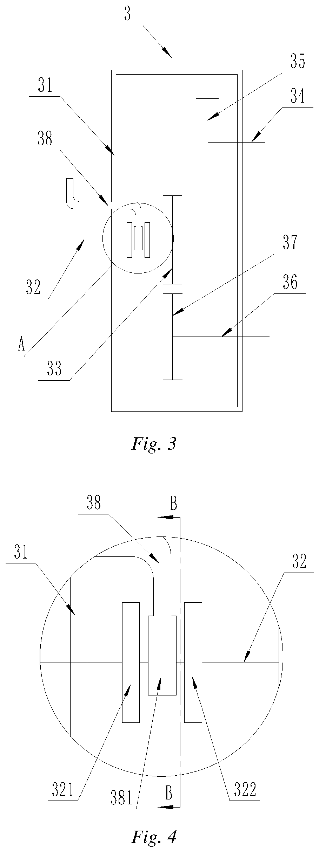

As shown in Fig. 1 and Fig. 2, a power generation system of a mobile charging vehicle of the invention mainly comprises an engine 1, a gearbox 2, a transfer case 3, a power generator 4 and a drive axle 5 which are arranged on the mobile charging vehicle. An output shaft of the engine 1 is in driving connection with an input shaft of the gearbox 2, an output shaft of the gearbox 2 is in driving connection with an input shaft 32 (as shown in Fig. 3) of the transfer case 3, and two output shafts of the transfer case 3 are in driving connection with the power generator 4 and the drive axle 5 separately. The power generator 4 is used for providing charging service for an electric vehicle to be charged or other objects to be charged, and the drive axle 5 is used for driving wheels of the mobile charging vehicle to rotate so as to drive the mobile charging vehicle to travel.

It should be noted that the driving connection of the invention refers to that two adjacent devices or members (for example, the engine 1 and the gearbox 2) are directly or indirectly connected together by means of other connection mechanisms (for example, a gear, a drive shaft, a drive belt, a chain, etc.), and one of the two devices or members can drive the other to move. For example, the output shaft of the engine 1 and the input shaft of the gearbox 2 are coaxially and fixedly connected together by means of a coupler, and the engine 1 may drive a gear in the gearbox 2 to rotate when working.

The drive axle 5 of the invention, although not shown in the figures, comprises at least one of a front axle and a rear axle of the mobile charging vehicle. When the mobile charging vehicle is a front-drive vehicle, the drive axle 5 only comprises the front axle of the mobile charging vehicle. When the mobile charging vehicle is a rear-drive vehicle, the drive axle 5 only comprises the rear axle of the mobile charging vehicle. When the mobile charging vehicle is a front-rear co-drive vehicle, the drive axle 5 comprises the front axle and the rear axle of the mobile charging vehicle.

As shown in Fig. 1 and Fig. 2, the gearbox 2 may selectively deliver, by means of the transfer case 3, a torque generated by the engine 1 to the power generator 4 or the drive axle 5.

As shown in Fig. 1, when the mobile charging vehicle travels, the gearbox 2 delivers, by means of the transfer case 3, the torque generated by the engine 1 to the drive axle 5. At the moment, the engine 1 drives the mobile charging vehicle to travel.

As shown in Fig. 2, when the mobile charging vehicle is stopped and needs to provide charging service, the gearbox 2 delivers, by means of the transfer case 3, the torque generated by the engine 1 to the power generator 4. At the moment, the engine 1 drives the power generator 4 to rotate so as to provide the charging service for the electric vehicle to be charged.

In addition, those skilled in the art can also enable the transfer case 3 to simultaneously transfer the torque transferred by the gearbox 2 to the power generator 4 and the drive axle 5 as required.

The main structure and working principle of the transfer case 3 are described in detail below with reference to Fig. 3 to Fig. 5.

As shown in Fig. 3, the transfer case 3 of the invention mainly comprises a case body 31, an input shaft 32, an input gear 33, a first output shaft 34, a first output gear 35, a second output shaft 36, a second output gear 37, and a driving mechanism 38.

With further reference to Fig. 3, the input shaft 32, the first output shaft 34, and the second output shaft 36 are pivotally connected to the case body 1 separately. In Fig. 3, a right end of the input shaft 32 is coaxially and fixedly connected to the input gear 33. In Fig. 3, a left end of the first output shaft 34 is coaxially and fixedly connected to the first output gear 35. In Fig. 3, a left end of the second output shaft 36 is coaxially and fixedly connected to the second output gear 37. Moreover, the first input gear 35 and the second input gear 37 are arranged in a staggered manner in an axial direction. Further, the input gear 33 may slide freely in the axial direction so that it can selectively mesh with the first output gear 35 or the second output gear 37. Alternatively, those skilled in the art may also enable the input gear 33 to simultaneously mesh with the first output gear 35 and the second output gear 37 as required.

It should be noted that the input shaft 32 and the input gear 33, the first output shaft 34 and the first output gear 35, as well as the second output shaft 36 and the second output gear 37 may be coaxially connected together in any feasible manner of connection, such as welding, interference connection, threaded connection, splined connection, etc.

As shown in Fig. 2 and Fig. 3 on the right, a left end of the input shaft 32 in Fig. 3 is coaxially and fixedly connected to the output shaft of the gearbox 2, and the input shaft 32 may slide in the axial direction. Specifically, an external spline is arranged at an end, close to the input shaft 32, of the output shaft of the gearbox 2, and an internal spline matching the external spline is arranged at an end, close to the gearbox 2, of the input shaft 32. The external spline on the output shaft of the gearbox 2 is inserted into the internal spline on the input shaft 32, thereby achieving coaxial fixation of the output shaft of the gearbox 2 and the input shaft 32, and also allowing the input shaft 32 to slide in the axial direction.

With further reference to Fig. 2 and Fig. 3, a right end of the first output shaft 34 in Fig. 3 is in driving connection with a spindle of the power generator 4. A right end of the second output gear 37 in Fig. 3 is in driving connection with the drive axle 5.

It should be noted that the driving connection manners between the first output shaft 34 and the spindle of the power generator 4 and between the second output gear 37 and the drive axle 5 can be a connection manner of a gear mechanism, a connection manner of a drive shaft mechanism, a connection manner of a chain mechanism, a connection manner of a drive belt mechanism, etc., or a connection manner combining the plurality of mechanisms.

As shown in Fig. 3 and Fig. 4, a first stop block 321 and a second stop block 322 which are adjacent to each other are arranged on the input shaft 32. Preferably, the first stop block 321 and the second stop clock 322 are both disc-shaped structures and are both coaxial with the input shaft 32.

As shown in Fig. 3 to Fig. 5, the driving mechanism 38 comprises a shifting fork 381 and a handle 382 which are fixedly connected together or integrally manufactured. The shifting fork 381 and the handle 382 may be fixedly connected together in any feasible manner, for example, welding, bolting, clamping, etc.

As shown in Fig. 3 and Fig. 4, the shifting fork 381 is arranged between the first stop block 321 and the second stop block 322, such that the shifting fork 381 may drive the input shaft 32 to move in the axial direction by means of the first stop block 321 and the second stop block 322.

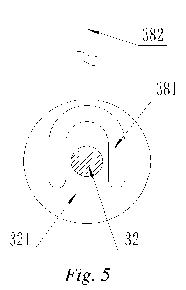

As shown in Fig. 5, the shifting fork 381 is of a U-shaped or C-shaped structure, and the inner diameter of the shifting fork 381 is larger than the diameter of the input shaft 32 so as to prevent the shifting fork 381 from making contact with the input shaft 32 to hinder rotation of the input shaft 32. Further, the outer diameter of the shifting fork 381 is smaller than the outer diameter of the first stop block 321 and the outer diameter of the second stop block 322, such that the shifting fork 381 may abut against the first stop block 321 and the second stop block 322 and then drives the input shaft 32 to move in the axial direction.

As shown in Fig. 3, after the handle 382 slidably penetrates a side wall of the case body 31 in the axial direction of the input shaft 32, one end of the handle is connected to or integrally manufactured with the shifting fork 381, and the other end thereof is connected to a driving device. The driving device may be an electric motor, an oil cylinder, an air cylinder, etc. The driving device may drive the handle 382 and the shifting fork 381 to slide in the axial direction of the input shaft 32 so as to drive the input shaft 32 to slide. In addition, those skilled in the art can also omit the driving device as required, and arrange the handle 382 in a form that allows manual operation by an operator.

The working principle of the power generation system of the invention is described in detail below in conjunction with Fig. 1 to Fig. 3.

As shown in Fig. 1 and Fig. 3, when the mobile charging vehicle needs to travel, the driving mechanism 38 is operated to slide to the left (left side of the driving structure in Fig. 3) such that the shifting fork 381 drives the input shaft 32 and the input gear 33 to slide to the left by means of the first stop block 321, thereby making the input gear 33 and the second output gear 37 mesh with each other. At the moment, the torque output by the engine 1 is transmitted to the drive axle 5 by means of the gearbox 2 and the transfer case 3 to drive the mobile charging vehicle to travel.

As shown in Fig. 2 and Fig. 3, when the mobile charging vehicle is stopped and charges the electric vehicle to be charged, the driving mechanism 38 is operated to slide to the right (right side of the driving structure in Fig. 3) such that the shifting fork 381 drives the input shaft 32 and the input gear 33 to slide to the left by means of the second stop block 322, thereby making the input gear 33 and the first output gear 35 mesh with each other. At the moment, the torque output by the engine 1 is transmitted to the power generator 4 by means of the gearbox 2 and the transfer case 3. The power generator 4 generates power to charge the electric vehicle to be charged.

Those skilled in the art can understand that the number of the power generator 4 is not limited to only one shown in Fig. 1 and Fig. 2, but may also be any number of two, three, four, etc. In order to drive a plurality of power generators 4 to work simultaneously, those skilled in the art may arrange a plurality of first output shafts 34 and first output gears 35 on the transfer case 3, wherein the number of the first output shafts and the first output gears is equivalent to that of the power generators 4. Alternatively, those skilled in the art may also provide a power takeoff between the first output shaft 34 and the plurality of power generators 4, an input shaft of the power takeoff is in driving connection with the first output shaft 34, and each output shaft of the power takeoff is separately connected to a power generator 4. The power takeoff is a conventional power takeoff in the prior art and can be obtained by those skilled in the art, which is thus not described too much here.

Based on the above description, those skilled in the art can understand that an output end of the gearbox 2 is connected to the transfer case 3, the first output shaft 34 of the transfer case 3 is connected to the power generator 4, and the second output shaft 36 of the transfer case 3 is connected to the drive axle 5 of the mobile charging vehicle, such that the torque output by the engine 1 may be selectively transmitted to the power generator 4 or the drive axle 5 by means of the transfer case 3. Therefore, compared with a mobile charging vehicle in the prior art, the mobile charging vehicle of the invention does not need to be configured with an independent engine for the power generator 4 any more, thereby reducing the overall weight of the mobile charging vehicle. Moreover, the mobile charging vehicle of the invention may also adjust a rotating speed output by the first output shaft 34 of the transfer case 3 by means of the gearbox 2, thereby adjusting the output power of the power generator 4. Further, the transfer case 3 of the invention may be arranged in a front cabin of the mobile charging vehicle and may also be arranged on a lower side of a chassis of the mobile charging vehicle, thereby also saving on the internal space of the mobile charging vehicle of the invention.

In addition, on the premise that the input gear 33 may selectively mesh with the first output gear 35 or the second output gear 37, those skilled in the art may also make the input shaft 32 not move axially and make the input gear 33 slide axially relative to the input shaft 32 as required. Moreover, the first stop block 321 and the second stop block 322 are coaxially and fixedly connected to the input gear 33 separately. Therefore, the driving mechanism 38 may directly drive, by means of the shifting fork 381, the input gear 33 to move in the axial direction, thereby achieving meshing connection between the input gear 33 and the first output gear 35 or the second output gear 37.

Those skilled in the art can understand that the transfer case 3 may also be replaced by any other feasible connection device while the engine 1 may selectively drive the power generator 4 and the drive axle 5.

As a first example, the connection device comprises a first clutch and a second clutch. Correspondingly, a gearbox 2 comprises a first output shaft and a second output shaft. A driving part of the first clutch is in driving connection with the first output shaft, and a driven part of the first clutch is in driving connection with a spindle of a power generator 4. A driving part of the second clutch is in driving connection with the second output shaft, and a driven part of the second clutch is in driving connection with a drive axle 5. When a mobile charging vehicle provides charging service, the driving part and the driven part of the first clutch are engaged, and the driving part and the driven part of the second clutch are disengaged. When the mobile charging vehicle travels, the driving part and the driven part of the first clutch are disengaged, and the driving part and the driven part of the second clutch are engaged. Alternatively, those skilled in the art may also engage both the driving parts and driven parts of the first clutch and the second clutch as required so that the mobile charging vehicle may also provide the charging service during travelling. The first clutch and/or the second clutch is preferably an electromagnetic clutch or a pneumatic clutch.

As an alternative to a first example, a transmission 2 only comprises one output shaft, and a one-input two-output power takeoff is arranged between the transmission 2 and two clutches. An input shaft of the power takeoff is in driving connection with an output shaft of the transmission 2, and two output shafts of the power takeoff are respectively in driving connection with one clutch.

As a second example, the connecting device comprises a first connection sleeve and a second connection sleeve. Internal splines are arranged in the first connection sleeve and the second connection sleeve. Correspondingly, a gearbox 2 comprises a first output shaft and a second output shaft. External splines matching the internal splines are arranged on the first output shaft and the second output shaft. An external spline matching the internal spline is also arranged on a spindle of a power generator 4, and an external spline matching the internal spline is also arranged on the drive axle 5. When a mobile charging vehicle provides charging service, the first connection sleeve is coaxially and fixedly connected to the first output shaft and the spindle of the power generator 4 by means of the splines. The external spline on the second connection sleeve cannot be connected to the external spline on the second output shaft or the drive axle 5. When the mobile charging vehicle travels, the first connection sleeve may not be connected to the first output shaft or the spindle of the power generator 4. The second connection sleeve is coaxially and fixedly connected to the external splines on the second output shaft and the drive axle 5 by means of the splines.

In addition, under the condition that the engine 1 may selectively drive the power generator 4 and the drive axle 5, those skilled in the art may also omit the gearbox 2 as required, so that the engine 1 is in direct driving connection to the transfer case 3 (or other connection devices). At the moment, the first output shaft and the second output shaft in the first example are arranged on the engine 1, that is, the engine 1 comprises two output shafts-the first output shaft and the second output shaft.

Heretofore, the technical solutions of the invention have been described in conjunction with the preferred embodiments shown in the drawings, however, those skilled in the art can readily understand that the scope of protection of the invention is obviously not limited to these specific embodiments. Those skilled in the art can make equivalent changes or substitutions to the related technical features without departing from the principles of the invention, and all the technical solutions after the changes or substitutions will fall within the scope of protection of the invention.

## Claims

1. A power generation system, **characterized in that** the power generation system is applied to a vehicle, the vehicle comprising an engine and a drive axle, and
the power generation system comprises a power generator and a connection device for connecting the engine and the power generator in a driving manner,
the connection device enabling the engine to be selectively connected to the power generator and/or the drive axle in a driving manner.

2. The power generation system according to claim 1, **characterized in that** the connection device comprises a transfer case, the transfer case comprising:
a case body;
an input shaft pivotally arranged on the case body and in driving connection with an output shaft of the engine;
a first output shaft pivotally arranged on the case body and in driving connection with a spindle of the power generator; and
a second output shaft pivotally arranged on the case body and in driving connection with the drive axle,
wherein the input shaft is capable of being selectively connected to the first output shaft or the second output shaft in a driving manner.

3. The power generation system according to claim 2, **characterized in that** the transfer case further comprises an input gear coaxially fixed to the input shaft, a first output gear coaxially fixed to the first output shaft, and a second output gear coaxially fixed to the second output shaft;
the first output gear and the second output gear are arranged in a staggered manner in an axial direction; and
the input gear is axially slidable and thus capable of selectively meshing with the first output gear or the second output gear.

4. The power generation system according to claim 3, **characterized in that** the transfer case further comprises a driving mechanism slidably arranged on the case body,
the driving mechanism being capable of shifting the input gear and thereby making the input gear selectively mesh with the first output gear or the second output gear.

5. The power generation system according to claim 4, **characterized in that** a first stop block and a second stop block which are adjacent to each other are arranged on the input shaft in the axial direction, and
the driving mechanism comprises a shifting fork located between the first stop block and the second stop block and a handle fixedly connected to or manufactured integrally with the shifting fork, the shifting fork being capable of selectively pushing the first stop block or the second stop block by operating the handle, thereby making the input gear move in the axial direction.

6. The power generation system according to claim 1, **characterized in that** the engine is provided with a first output shaft and a second output shaft in a matching manner, and
the connection device comprises a first clutch in driving connection with the first output shaft and a second clutch in driving connection with the second output shaft,
one end, away from the engine, of the first clutch being in driving connection with the power generator, and one end, away from the engine, of the second clutch being in driving connection with the drive axle of the vehicle.

7. The power generation system according to claim 6, **characterized in that** the first output shaft and the second output shaft are both arranged on the engine, or the first output shaft and the second output shaft are both arranged on a power takeoff which is in driving connection with the engine;
and/or, the first clutch and/or the second clutch is an electromagnetic clutch or a pneumatic clutch.

8. The power generation system according to any one of claims 2 to 7, **characterized in that** the drive axle comprises a front axle and/or a rear axle of the vehicle.

9. The power generation system according to any one of claims 1 to 7, **characterized in that** the power generation system further comprises a gearbox, an input shaft of the gearbox being in driving connection with the engine, and an output shaft of the gearbox being in driving connection with the connection device.

10. A mobile charging vehicle, **characterized in that** the mobile charging vehicle comprises the power generation system of any one of claims 1 to 9.
